Europäisches Patentamt

European Patent Office

Office européen des brevets

(11) Numéro de publication: **0 262 020**
**A1**

## (12) DEMANDE DE BREVET EUROPEEN

(21) Numéro de dépôt: **87402009.2**

(22) Date de dépôt: **09.09.87**

(51) Int. Cl.⁴: **G 02 C 5/12**

(30) Priorité: **15.09.86 FR 8612842**

(43) Date de publication de la demande:
**30.03.88 Bulletin 88/13**

(84) Etats contractants désignés:
**AT CH DE GB IT LI**

(71) Demandeur: **ESSILOR INTERNATIONAL Cie Générale
d'Optique
1 Rue Thomas Edison Echat 902
F-94028 Creteil Cedex (FR)**

(72) Inventeur: **Lhospice, Bernard
36 Avenue du Général Leclerc
F-41000 Blois (FR)**

(74) Mandataire: **CABINET BONNET-THIRION
95 Boulevard Beaumarchais
F-75003 Paris (FR)**

(54) **Monture de lunettes.**

(57) Il s'agit d'une monture de lunettes dont le pontet médian (11) est constitué par un ressort en forme d'oméga.

Suivant l'invention, le pontet médian (11) est mis à profit pour l'implantation des moyens d'appui nasal (12), lesdits moyens d'appui nasal (12) comportant une pièce de support en U (20) dont chacune des ailes (21) est en prise avec l'extrémité concernée de la partie médiane (17) de ce pontet médian (11).

Application aux montures de lunettes.

FIG.1

## Description

"Monture de lunettes"

La présente invention concerne d'une manière générale les montures de lunettes.

Pour la réception de verres de lunettes, une telle monture de lunettes comporte, globalement, ainsi qu'on le sait, deux cercles ou entourages, qui sont reliés l'un à l'autre par un pontet médian, et auxquels il est associé, du côté de ce pontet, des moyens d'appui nasal, qu'il s'agisse de plaquettes individuelles ou qu'il s'agisse d'un nez-selle englobant de telles plaquettes.

La présente invention vise plus particulièrement le cas où le pontet est constitué par un ressort en forme d'oméga, c'est-à-dire par un ressort comportant deux pattes latérales, par lesquelles, chacune respectivement, il est assujetti aux cercles ou entourages correspondants, et une partie médiane, dont les extrémités, à concavités tournées l'une vers l'autre, sont, chacune respectivement, en rebroussement relatif par rapport auxdites pattes latérales.

Les montures de lunettes équipées d'un tel pontet ont notamment pour avantage de présenter une capacité d'ouverture élastique propre à en faciliter l'adaptation à la morphologie particulière du visage de leur porteur et à en assurer un meilleur maintien sur celui-ci.

Mais, à raison même de cette capacité d'ouverture, il résulte une modification de la position des moyens d'appui nasal associés, ceux-ci étant normalement directement assujettis aux cercles ou entourages correspondants, et donc bougeant avec ceux-ci.

Globalement la latitude d'ensemble de réglage de la position de ces moyens d'appui nasal s'en trouve réduite d'autant.

La présente invention a d'une manière générale pour objet une disposition permettant d'obvier de manière très simple à cet inconvénient, en tirant un parti supplémentaire de la structure propre du pontet médian, et conduisant en outre à d'autres avantages.

De manière plus précise, elle a pour objet une monture de lunettes du genre comportant, pour la réception de verres de lunettes, deux cercles ou entourages, qui sont reliés l'un à l'autre par un pontet, et auxquels il est associé, du côté de ce pontet, des moyens d'appui nasal, cette monture de lunettes étant d'une manière générale caractérisée en ce que, le pontet étant constitué par un ressort en forme d'oméga, c'est-à-dire par un ressort comportant deux pattes latérales, par lesquelles, chacune respectivement, il est assujetti aux cercles aux entourages, et une partie médiane, dont les extrémités, à concavités tournées l'une vers l'autre, sont, chacune respectivement, en rebroussement par rapport auxdites pattes latérales, ledit pontet est mis à profit pour l'implantation des moyens d'appui nasal, lesdits moyens d'appui nasal comportant une pièce de support en U dont chacune des ailes est en prise avec l'extrémité concernée de la partie médiane de ce pontet.

En pratique, chacune des ailes de cette pièce de support est ainsi en prise avec l'extrémité concernée de la partie médiane du pontet à la faveur de la concavité de celle-ci, en étant simplement crochetée élastiquement sur cette dite extrémité.

Quoi qu'il en soit, ainsi affranchis des cercles ou entourages, les moyens d'appui nasal ne sont pas concernés par le mouvement d'écartement que connaissent l'un par rapport à l'autre ces cercles ou entourages lors d'une ouverture élastique de l'ensemble, et leur possibilité de réglage en position est dès lors avantageusement comparable à celle des moyens d'appui nasal équipant en un point fixe les montures de lunettes usuelles.

En outre, aucun moyen particulier n'est à mettre en oeuvre pour la fixation de ces moyens d'appui nasal, seule intervenant, pour cette fixation, la forme du pontet, inhérente, d'origine, à celui-ci.

Enfin, du fait même d'un tel mode de fixation, il est avantageusement possible, à la demande, d'adapter, sur une monture de lunettes, l'un ou l'autre de moyens d'appui nasal, à plaquettes ou nez-selle, de types différents, voire même d'en changer à son gré.

Il en résulte une grande facilité d'adaptation pour le porteur, au bénéfice du confort de celui-ci.

Les caractéristiques et avantages de l'invention ressortiront d'ailleurs de la description qui va suivre, à titre d'exemple, en référence aux dessins schématiques annexés sur lesquels :

la figure 1 est une vue en perspective partielle, vue de l'arrière, d'une monture de lunettes suivant l'invention ;

la figure 2 reprend, de manière éclatée, la partie de la vue de la figure 1 concernée par le pontet de cette monture de lunettes ;

la figure 3 en est, à échelle supérieure, une vue en plan, suivant la flèche III de la figure 2 ;

les figures 4, 5 sont chacune respectivement des vues en perspective de variante de réalisation des moyens d'appui nasal susceptibles de l'équiper.

Tel qu'illustré sur ces figures, et de manière connue en soi, la monture de lunettes suivant l'invention comporte, globalement, pour la réception de deux verres de lunettes non représentés, deux cercles ou entourages 10, qui sont reliés l'un à l'autre par un pontet médian 11, et auxquels il est associé, du côté de ce pontet médian 11, c'est-à-dire du côté nasal, des moyens d'appui nasal 12.

Du côté opposé au pontet médian 11, c'est-à-dire du côté temporal, il est articulé à chacun de ces cercles ou entourages 10 une branche latérale de support 13.

La constitution propre des cercles ou entourages 10, ici métalliques, et doublés, à leur partie supérieure, par un arceau 14, n'est pas concernée par la présente invention, et, ne faisant donc pas partie de celle-ci, elle ne sera pas décrite en détail ici.

De manière également connue en soi, le pontet médian 11 est constitué par un ressort en forme d'oméga, c'est-à-dire par un ressort comportant deux pattes latérales 15, par lesquelles, chacune respectivement, il est assujetti aux cercles ou entourages 10, par l'intermédiaire, dans la forme de réalisation représentée, d'une entretoise 16, et une partie médiane 17, dont les extrémités 18, à concavités tournées l'une vers l'autre, sont, chacune respectivement, en rebroussement relatif par rapport auxdites pattes latérales 15.

Tel que représenté, le ressort constituant ainsi le pontet médian 11 peut être formé par un tronçon de feuillard d'acier à ressort convenablement découpé et conformé.

S'agissant de cercles ou entourages 10 métalliques, l'assemblage de l'ensemble se fait alors par soudage.

Mais, bien entendu, de telles dispositions ne sont en rien limitatives de l'invention.

Suivant l'invention, le pontet médian 11 est mis à profit pour l'implantation des moyens d'appui nasal 12, lesdits moyens d'appui nasal 12 comportant à cet effet une pièce de support en U 20, formant adaptateur, dont chacune des ailes 21 est en prise avec l'extrémité 18 concernée de la partie médiane 17 de ce pontet médian 11, à la faveur, en pratique, de la concavité d'une telle extrémité 18.

Autrement dit, les extrémités 18 du pontet médian 11 ayant globalement chacune une allure en S, c'est par la partie interne, concave, d'une telle extrémité, c'est-à-dire la partie de celle-ci la plus éloignée de la patte 15 correspondante, que, dans les formes de réalisation représentées, les ailes 21 de la pièce de support 20 des moyens d'appui nasal 12 sont en prise avec un tel pontet médian 11.

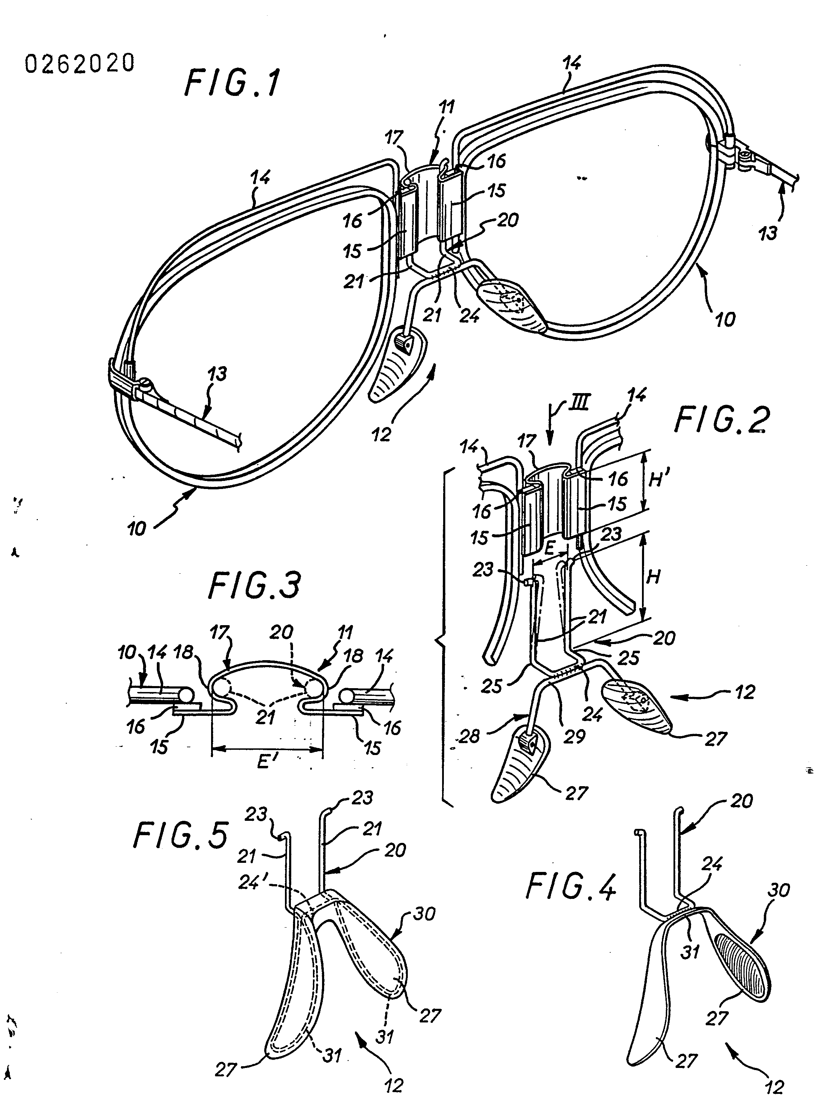

Dans les formes de réalisation représentées, les ailes 21 de cette pièce de support 20 sont élastiquement déformables, et elles peuvent donc être élastiquement rapprochées, ou écartées, l'une de l'autre, tel que schématisé en traits interrompus à la figure 2.

Par construction, il est fait en sorte que, au repos, elles divergent légèrement l'une par rapport à l'autre, leur écartement relatif E, mesuré à leur extrémité libre, étant alors légèrement supérieur à la distance E' qui, mesurée à la surface interne de leur fond concave, sépare l'une de l'autre les extrémités 18 de la partie médiane 17 du pontet médian 11.

De préférence, et tel que représenté, les ailes 21 de la pièce de support 20 des moyens d'appui nasal 12 présentent chacune, à leur extrémité libre, et, en pratique, en directions opposées l'une par rapport à l'autre, un retour en équerre 23 propre à leur crochetage sur la tranche supérieure du pontet médian 11.

Enfin, et tel qu'également représenté, les ailes 21 de cette pièce de support 20 présentent chacune, en correspondance l'une avec l'autre, entre leur extrémité libre et celle par laquelle elles se raccordent à la partie médiane 24 qu'elles encadrent, un coude 25, qui, en pratique, s'étend perpendiculairement au plan qu'elles forment avec leur retour en équerre 23, et qui est propre à en permettre l'appui sur la tranche inférieure du pontet médian 11.

En pratique, la hauteur H de la partie courante des ailes 21 de la pièce de support 20, celle qui sépare leur retour en équerre 23 de leur coude 25, est sensiblement égale à la hauteur H' du pontet médian 11 tout en étant légèrement supérieure à celle-ci.

Tel que représenté, la pièce de support 20 ainsi constituée peut être réalisée sous la forme d'une épingle en fil rond convenablement découpé et plié.

Mais cette disposition n'est évidemment pas limitative de l'invention.

Outre la pièce de support 20, les moyens d'appui nasal 12 comportent, de manière connue en soi, des organes d'appui nasal.

Dans la forme de réalisation plus particulièrement représentée sur les figures 1, 2, il s'agit de plaquettes d'appui 27, qui, distinctes de la pièce de support 20, sont convenablement rapportées sur celle-ci.

Par exemple, et tel que représenté, ces plaquettes d'appui 27 sont chacune individuellement articulées aux extrémités d'une anse de support 28 qui, par sa partie médiane 29 est rapportée, par exemple par soudage, sur la partie médiane 24 de la pièce de support 20.

En variante, figure 4, les plaquettes d'appui 27 appartiennent conjointement à un ensemble 30, communément appelé nez-selle, qui, par sa partie médiane 31 est, de manière semblable à la précédente, rapporté sur la partie médiane 24 de la pièce de support 20.

Suivant une autre variante, figure 5, le nez-selle 30 que forment ainsi de telles plaquettes d'appui 27 est surmoulé sur la pièce de support 20, la partie médiane 24' de celle-ci étant conformée de manière à former une armature pour de tels organes d'appui.

Par exemple, et tel que représenté, cette partie médiane 24' de la pièce de support 20 forme globalement une boucle interne 31 pour chacune des plaquettes d'appui 27.

Quoi qu'il en soit, pour la mise en place des moyens d'appui nasal 12, il suffit, suivant l'invention, de rapprocher élastiquement l'une de l'autre les ailes 21 de la pièce de support 20 de ces moyens d'appui nasal 12 et de les engager dans la pièce cylindrique que constitue le pontet médian 11 jusqu'à ce que, par leur coude 25, elles viennent en butée contre la tranche inférieure de ce pontet médian 11.

Alors libérées, les ailes 21 de la pièce de support 20 des moyens d'appui nasal 12 viennent se crocheter, par leur retour en équerre 23, sur la tranche supérieure du pontet médian 11, en portant élastiquement sur le fond concave des extrémités 18 de celui-ci, ce qui suffit au maintien de ces moyens d'appui nasal 12 sur ce pontet médian 11.

Bien entendu, la monture de lunettes suivant l'invention peut, si désiré, se compléter par un enjoliveur, non représenté, propre à être rapporté sur tout ou partie du pontet médian 11, par exemple pour dissimuler les retours en équerre 23 des ailes 21 de la pièce de support 20 des moyens d'appui nasal 12.

La présente invention ne se limite d'ailleurs pas aux formes de réalisation décrites et représentées, mais englobe toute variante d'exécution.

En particulier, si, dans les formes de réalisation plus particulièrement décrites et représentées, la partie médiane du pontet médian est, de l'une à l'autre des pattes latérales de celui-ci, globalement arrondie, il n'en est pas nécessairement ainsi, la portion centrale de cette partie médiane pouvant au contraire être par exemple plus ou moins aplatie.

On ne sortirait pas par ailleurs du cadre de la présente invention en implantant les ailes de la pièce de support des moyens d'appui nasal à la faveur de la partie extérieure, convexe, des extrémités de la partie médiane du pontet médian, celle la plus proche des pattes latérales de celui-ci, la mise en place de cette pièce de support sur ce pontet médian devant alors se faire par écartement élastique de ces ailes au lieu d'un rapprochement élastique de celles-ci.

Dans l'un et l'autre cas, et suivant l'invention, un parti supplémentaire est en effet avantageusement tiré du pontet médian, celui-ci étant mis à profit pour l'implantation des moyens d'appui nasal et suffisant par sa forme même à cette implantation.

**Revendications**

1. Monture de lunettes, du genre comportant, pour la réception de verres de lunettes, deux cercles ou entourages (10), qui sont reliés l'un à l'autre par un pontet (11), et auxquels il est associé, du côté de ce pontet, des moyens d'appui nasal (12), caractérisée en ce que, le pontet (11) étant constitué par un ressort en forme d'oméga, c'est-à-dire par un ressort comportant deux pattes latérales (15), par lesquelles, chacune respectivement, il est assujetti aux cercles ou entourages (10), et une partie médiane (17), dont les extrémités (18), à concavités tournées l'une vers l'autre, sont, chacune respectivement, en rebroussement par rapport auxdites pattes latérales (15), ledit pontet (11) est mis à profit pour l'implantation des moyens d'appui nasal (12), lesdits moyens d'appui nasal (12) comportant une pièce de support en U (20) dont chacune des ailes (21) est en prise avec l'extrémité (18) concernée de la partie médiane (17) de ce pontet (11).

2. Monture de lunettes suivant la revendication 1, caractérisée en ce que chacune des ailes (21) de la pièce de support (20) des moyens d'appui nasal (12) est en prise avec l'extrémité (18) concernée de la partie médiane (17) du pontet (11) à la faveur de la concavité de celle-ci.

3. Monture de lunettes suivant l'une quelconque des revendications 1, 2, caractérisée en ce que les ailes (21) de la pièce de support (20) des moyens d'appui nasal (12) sont élastiquement déformables, et elles peuvent donc être élastiquement rapprochées ou écartées l'une de l'autre.

4. Monture de lunettes suivant l'une quelconque des revendications 1 à 3, caractérisée en ce que les ailes (21) de la pièce de support (20) des moyens d'appui nasal (12) présentent chacune un retour en équerre (23) à leur extrémité libre.

5. Monture de lunettes suivant l'une quelconque des revendications 1 à 4, caractérisée en ce que, en correspondance l'une avec l'autre, les ailes (21) de la pièce de support (20) des moyens d'appui nasal (12) présentent chacune un coude (25) entre leur extrémité libre et celle par laquelle elles se raccordent à la partie médiane (24) qu'elles encadrent.

6. Monture de lunettes suivant les revendications 4, 5, prises conjointement, caractérisée en ce que la hauteur (H) de la partie courante des ailes (21) de la pièce de support (20) des moyens d'appui nasal (12), entre leur retour en équerre (23) et leur coude (25) est sensiblement égale à la hauteur (H') du pontet (11) tout en étant légèrement supérieure à celle-ci.

7. Monture de lunettes suivant l'une quelconque des revendications 1 à 6, caractérisée en ce que les moyens d'appui nasal (12) comportent des organes d'appui, plaquettes (27) ou nezselle (30), distincts de sa pièce de support (20) et convenablement rapportés sur celle-ci.

8. Monture de lunettes suivant l'une quelconque des revendications 1 à 6, caractérisée en ce que les moyens d'appui nasal (12) comportent des organes d'appui, plaquettes (27) ou nezselle (30), surmoulés sur sa pièce de support (20), la partie médiane (24') de ladite pièce de support (20) étant conformée de manière à former une armature pour lesdits organes d'appui.

9. Monture de lunettes suivant la revendication 8, caractérisée en ce que la partie médiane (24') de la pièce de support (20) des moyens d'appui nasal (12) forme globalement une boucle interne (31) pour chacune des plaquettes d'appui (27) qu'ils comportent.

0262020

**FIG.1**

**FIG.2**

**FIG.3**

**FIG.5**

**FIG.4**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 123 976 (R. ENGELHARDT NOMINEES) <br> * Abrégé; revendications * <br> --- | 1 | G 02 C 5/12 |
| A | FR-A-2 419 526 (ESSILOR INTERNATIONAL) <br> * Revendications * <br> --- | 1 | |
| A | US-A-4 470 674 (C. PIAMPIANO) <br> * Revendications * <br> --- | 1 | |
| A | GB-A-2 102 150 (ESSILOR INTERNATIONAL) <br> * Revendications * <br> --- | 1 | |
| A | FR-A-2 164 074 (BERTHET-BONDET) <br> ----- | | |

| DOMAINES TECHNIQUES RECHERCHES (Int. Cl.4) |
|---|
| G 02 C 5/12 <br> G 02 C 1/08 |

Le présent rapport a été établi pour toutes les revendications

| Lieu de la recherche | Date d'achèvement de la recherche | Examinateur |
|---|---|---|
| LA HAYE | 18-12-1987 | CALLEWAERT-HAEZEBROUCK H |